(19) Europäisches Patentamt
European Patent Office
Office européen des brevets

(11) Veröffentlichungsnummer: **0 221 320**
**B1**

(12) # EUROPÄISCHE PATENTSCHRIFT

(45) Veröffentlichungstag der Patentschrift: **29.11.89**

(51) Int. Cl.⁴: **C 08 F 36/18**

(21) Anmeldenummer: **86113138.1**

(22) Anmeldetag: **24.09.86**

(54) **Verfahren zur Herstellung von Chloroprenpolymerisaten.**

(30) Priorität: **03.10.85 DE 3535248**

(43) Veröffentlichungstag der Anmeldung: **13.05.87 Patentblatt 87/20**

(45) Bekanntmachung des Hinweises auf die Patenterteilung: **29.11.89 Patentblatt 89/48**

(84) Benannte Vertragsstaaten: **DE FR GB IT**

(56) Entgegenhaltungen:
**DE-A- 3 507 825**
**FR-A- 1 480 110**
**FR-A- 2 098 562**
**US-A- 2 426 854**

(73) Patentinhaber: **BAYER AG, D-5090 Leverkusen 1 Bayerwerk (DE)**

(72) Erfinder: **Obrecht, Werner, Dr., Holderbergerstrasse 108, D-4130 Moers 2 (DE)**
Erfinder: **Wendling, Peter, Franz-Marc-Strasse 9, D-5090 Leverkusen 1 (DE)**
Erfinder: **Göbel, Wilhelm, Dr., Max-Beckmann-Strasse 37, D-5090 Leverkusen 1 (DE)**
Erfinder: **Müller, Eberhard, Dr., Pfauenstrasse 19, D-4047 Dormagen 1 (DE)**

**EP 0 221 320 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bekannt, Chloropren (CP) allein oder mit bis zu 20 Gew.-%, bezogen auf Gesamtmonomermenge, anderer Monomerer, wie 2,3-Dichlorbutadien (DCB), 1-Chlorbutadien, Butadien, Isopren, Acrylsäure, Methacrylsäure, Acrylnitril oder Methacrylnitril in Gegenwart geeigneter Aktivatoren zu polymerisieren.

Die Polymerisation wird im allgemeinen zwischen 0°C und 70°C durchgeführt. Von der Polymerisationstemperatur hängt die Mikrostruktur des Polychloroprens ab, wobei mit abnehmender Polymerisationstemperatur der Gehalt an trans 1,4-Strukturen zunimmt. Da trans 1,4-Strukturen kristallisieren, nehmen sowohl Kristallinitätsgrad, Kristallisationsgeschwindigkeit als auch die Fähigkeit zur Dehnungskristallisation mit abnehmender Polymerisationstemperatur zu [P.R. Johnson, Rubber Chem. Techn. 49, 650-702 (1976)]. Da die Zugfestigkeit von Vulkanisaten direkt von der Fähigkeit zur Dehnungskristallisation abhängt [A.K. Bhownick, A.K.. Gent, Rubber Chem. Techn. 56, 845 (1983)], ist es offensichtlich, Vulkanisate mit verbesserter Zugfestigkeit durch Absenken der Polymerisationstemperatur herzustellen.

Eine Erniedrigung der Polymerisationstemperatur hat jedoch eine Reihe von Nachteilen. Sie führt zu einer Abnahme der Polymerisationsgeschwindigkeit und somit zu einer Reduktion der Raum/Zeit-Ausbeute einer Anlage. Die Temperaturdifferenz zum Kühlmedium (im allgemeinen Leitungswasser) wird geringer. Aus diesem Grund müssen entweder zur ausreichenden Kühlung andere Kühlmedien eingesetzt oder die Kühlflächen vergrößert werden. Wenn die Differenz zwischen Polymerisationstemperatur und Temperatur des Kühlmediums zu gering ist, läßt sich die Polymerisationstemperatur wesentlich schlechter einstellen. Da außerdem mit abnehmender Polymerisationstemperatur der Kristallisationsgrad und die Kristallisationsgeschwindigkeit des Polymeren zunehmen, wird das Vulkanisat für bestimmte Einsatzgebiete ungeeignet, da es zu stark verhärtet. Auch eine zu rasche Verhärtung von Kautschukmischungen insbesondere bei der Lagerung ist unerwünscht. Abhilfe schafft hier die Copolymerisation mit einem die Kristallisation störenden Comonomer wie 2,3-Dichlorbutadien. Das beeinträchtigt jedoch die Wirtschaftlichkeit des Verfahrens.

Aufgabe der Erfindung war es, ein Verfahren zu entwickeln, das Produkte mit einer verbesserten Zugfestigkeit als der bei der gegebenen Reaktionstemperatur erwarteten liefert. Ein solches Verfahren wäre ökonomischer als die bekannten Verfahren und würde wegen der besseren Temperaturkonstanz gleichmäßigere Produkte liefern.

Diese Aufgabe wird erfindungsgemäß dadurch gelöst, daß die Polymerisation oder Copolymerisation von Chloropren mit Peroxokatalysatoren in Gegenwart von Dithiocarbamaten und oder Xanthogenaten und gegebenenfalls Natrium-β-anthrachinonsulfonat («Silbersalz») durchgeführt wird.

Die Durchführbarkeit der Polymerisation in Gegenwart von Dithiocarbamaten und Xanthogenaten war überraschend, da diese Verbindungen bei der Emulsionspolymerisation von Chloropren als Abstoppagentien eingesetzt werden (FR-A-1 480 110).

Gegenstand der Erfindung ist daher ein Verfahren zur Herstellung von Polychloropren durch Emulsions-(Co)polymerisation von Chloropren und gegebenenfalls weiteren, mit Chloropren copolymerisierbaren Monomeren mit Hilfe eines Peroxoaktivators und nachfolgende Aufarbeitung durch Abstoppen, Stabilisieren, Entgasen und Isolieren, dadurch gekennzeichnet, daß man die Polymerisation in Gegenwart von Dithiocarbamaten und/oder Xanthogenaten und 0 bis 0,5 Gew.-% Silbersalz als Coaktivator durchführt.

Geeignete Polychloroprenkautschuke sind solche, die bis zu 30 Gew.-% andere Monomere, beispielsweise 2,3-Dichlorbutadien, 1-Chlorbutadien, Butadien, Isopren, Acrylsäure, Methacrylsäure, Acrylnitril oder Methacrylnitril, vorzugsweise bis 20 Gew.-% 2,3-Dichlorbutadien einpolymerisiert enthalten.

Geeignete Aktivatoren sind z.B. Persulfate, Perborate, Percarbonate, Perphosphate und $H_2O_2$, vorzugsweise wasserlösliche Salze der Peroxodischwefelsäure. Die Aktivatoren werden vorzugsweise in einer molaren Menge, die 0,03 bis 3,0 Gew.-%, insbesondere 0,1 bis 1,0 Gew.-%, bezogen auf Monomere, Kaliumperoxodisulfat entspricht, eingesetzt.

Vorzugsweise werden von der Gesamtmenge an Peroxiaktivator 5 bis 30% bei Polymerisationsbeginn zugegeben und die restlichen 70 bis 95% während der Polymerisation entweder portionsweise oder kontinuierlich zudosiert.

Natrium-anthrachinon-2-sulfonat wird vorzugsweise in einer Menge von 0,005 bis 0,1 Gew.-%, bezogen auf Monomere, verwendet. Es wird als Lösung zusammen mit dem Peroxiaktivator zudosiert oder vorzugsweise im Polymerisationsansatz vor der Aktivierung quantitativ vorgelegt.

Die Polymerisation wird bei Temperaturen von −10 bis +70°C, vorzugsweise 0 bis 50°C durchgeführt.

Als Regler werden Xanthogendisulfide und vorzugsweise Mercaptane eingesetzt.

Geeignete Agentien zum Abstoppen der Polymerisation sind z.B. Brenzkatechin und vorzugsweise Diethylhydroxylamin, das in einer Menge von 0,05 bis 0,15 Gew.-%, bezogen auf Monomere, vorzugsweise in Form einer wäßrigen Lösung eingesetzt wird.

Zur Verbesserung der Lagerstabilität des Polymeren werden übliche Alterungsschutzmittel wie sterisch gehinderte Phenolderivate, Phosphite, Xanthogendisulfide oder Thiuramdisulfide eingesetzt. Mischungen solcher Alterungsmittel sind bevorzugt, wobei eine Komponente vorzugsweise ein Tetraalkylthiuramdisulfid ist. Die Zugabe erfolgt als wäßrige Dispersion, organische Lösung oder wäßrige Emulsionen einer organischen Lösung zum Latex vor oder nach Entfernung nicht umgesetzter Monomerer. Man setzt bis zu 6 Gew.-% Tetraethylthiuramdisulfid (TETD) bezogen auf Monomere, oder eine entsprechende molare Menge einer anderen Verbindung ein.

Die Dithiocarbamate und Xanthogenate werden bevorzugt in Form ihrer Alkalisalze, insbesondere Natrium-, Kalium- oder Ammoniumsalze verwendet.

Geeignete Dithiocarbamatanionen entsprechen der Formel

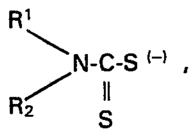

geeignete Xanthogenatanionen der Formel

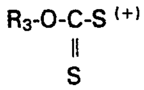

wobei $R_1$, $R_2$ und $R_3$ einen gegebenenfalls substituierten Alkyl-, Cycloalkyl- oder Arylrest bedeuten, $R_1$ und $R_2$ darüber hinaus zusammen mit dem Stickstoffatom einen Ring bilden können und $R_1$, $R_2$ und $R_3$ Heteroatome enthalten können.

Vorzugsweise bedeuten $R_1$ und $R_2$ $C_1$-$C_4$-Alkyl, $R_3$ $C_1$-$C_8$-Alkyl oder 2,2-(2,3-Dioxapentamethylen)-butyl.

Vorzugsweise werden 0,05 bis 5,0, insbesondere 0,1 bis 3,0 Gew.-%, Natriumdibutyldithiocarbamat, bezogen auf Monomere, oder eine entsprechende molare Menge eines anderen Dithiocarbamates oder 0,1 bis 5,0, insbesondere 0,5 bis 3,0 Gew.-% Kaliumethylcanthogenat, bezogen auf Monomere, oder eine entsprechende molare Menge eines anderen Xanthogenates, eingesetzt.

*Beispiele*

Die Versuche basieren auf folgender Grundrezeptur (batch-Versuche, Angaben in Gew.-Teilen):

| | |
|---|---|
| Chloropren und Comonomer: | 100 |
| n-Dodecylmercaptan (n-DDM): | siehe Tabellen |
| Entsalztes Wasser: | 110 |
| Disproportionierte Abietinsäure: | 2,8 |
| Na-Salze des Kondensationsproduktes aus Naphthalinsulfonsäure und Formaldehyd: | 0,65 |
| KOH: | 0,60 |
| $K_2S_2O_8$: | siehe Tabellen |
| Silbersalz: | siehe Tabellen |
| Additiv: | siehe Tabellen |

Die Versuche wurden in einem 20-l-Rührreaktor durchgeführt. In diesem Gefäß wurde die wäßrige Phase bestehend aus entsalztem Wasser, disproportionierte Abietinsäure, KOH, Silbersalz und Na-Salz des Kondensationsprodukts aus Naphthalinsulfonsäure und Formaldehyd vorgelegt, mit Stickstoff gespült und auf 45°C aufgeheizt (Ausnahme: Beispiel k auf 25°C). Dann wurde zunächst das mit Stickstoff gespülte Monomere oder Monomerengemisch zugegeben, anschließend das Additiv als wäßrige Lösung zugesetzt.

Die Aktivierung erfolgte jeweils mit einer geringen Menge an $K_2S_2O_8$:

| | |
|---|---|
| Beispiele c) d) e) j): | 0,015 Gew.-Teile $K_2S_2O_8$ |
| Beispiele a) b) f): | 0,020 Gew.-Teile $K_2S_2O_8$ |
| Beispiele g) h) i): | 0,030 Gew.-Teile $K_2S_2O_8$ |
| Beispiel k): | 0,006 Gew.-Teile $K_2S_2O_8$ |

Die Persulfatlösung wurde als wäßrige Lösung, die mit Stickstoff gespült wurde, zugegeben:

| | |
|---|---|
| Beispiele c) d) e) j): | 0,7 gew.%ige $K_2S_2O_8$-Lösung |
| Beispiele a) b) f): | 1,4 gew.%ige $K_2S_2O_8$-Lösung |
| Beispiele g) h) i): | 2,0 gew.%ige $K_2S_2O_8$-Lösung |
| Beispiel k): | 3,0 gew.%ige $K_2S_2O_8$-Lösung |

Während der Versuche wurde $K_2S_2O_8$ in Form der oben aufgeführten verdünnten, wäßrigen, mit Stickstoff gespülten Lösungen, zudosiert:

| | |
|---|---|
| Beispiele c) d) e) j): | $3{,}5 \cdot 10^{-4}$ Gew.-Teile $K_2S_2O_8$ pro Minute |
| Beispiele a) b) c): | $7{,}5 \cdot 10^{-4}$ Gew.-Teile $K_2S_2O_8$ pro Minute |
| Beispiele g) h) i): | $2{,}25 \cdot 10^{-3}$ Gew.-Teile $K_2S_2O_8$ pro Minute |
| Beispiel k): | $3{,}0 \cdot 10^{-4}$ Gew.-Teile $K_2S_2O_8$ pro Minute |

In den Tabellen sind jeweils die zur Erzielung der angeführten Umsätze benötigten Gesamtmengen an Persulfat aufgeführt. Der in der Grundrezeptur angegebene Gew.-Anteil an entsalztem Wasser erhöht sich zwangsweise durch den Wasseranteil der zudosierten wäßrigen Lösungen.

Es wurde bei 45°C unter Stickstoff polymerisiert [Beispiel k) = 25°C].

Der Umsatz wurde gravimetrisch verfolgt. Bei den verschiedenen Versuchen wurde bei den in den Tabellen aufgeführten Umsätzen mit 0,03 Gew.-Teilen, bezogen auf Latex, einer wäßrigen 2,5 gew.%-igen Lösung von Diethylhydroxylamin abgestoppt.

Der Latex wurde auf ca. 500 ppm Restchloropren (bezogen auf Latex) entgast. Der entgaste Latex wurde mit 20 gew.%iger Essigsäure auf pH 6,5 gestellt, das Polymere durch Gefrierkoagulation isoliert, mit entsalztem Wasser gewaschen, die Felle mit einer Quetschwalze auf ca. 30 Gew.-% Restfeuchte entwässert und im Umlufttrockenschrank bei 70°C bis zu einer Restfeuchte $\leq$0,5 Gew.-% getrocknet.

Änderungen dieser Vorschrift sind in den nachfolgenden Tabellen vermerkt.

*Vergleichsbeispiele*

*Vergleichsbeispiel 1*

Dieses Vergleichsbeispiel wurde nach DE-OS 3 002 711, Beispiel 13 durchgeführt. Als Aktivator diente Formamidinsulfinsäure. Das Polymere wurde ohne Comonomer bei einer Polymerisationstemperatur von 45°C und einem Umsatz von 65% erhalten.

*Vergleichsbeispiel 2*

Das Vergleichsbeispiel wurde nach DE-OS 3 002 711, Beispiel 7 durchgeführt. Als Aktivator diente Formamidinsulfinsäure. Das Polymere wurde mit 5,4 Gew.-% 2,3-Dichlorbutadien als Comonomer, bezogen auf Gesamtmonomer, bei einer Polymerisationstemperatur von 45°C und einem Umsatz von 65% erhalten.

*Vergleichsbeispiel 3*

Das Vergleichsbeispiel wurde nach DE-OS

3 105 339 (Herstellung des Solpolymeren) durchgeführt. Als Aktivator diente Formamidinsulfinsäure. Das Polymere wurde ohne Comonomer bei einer Polymerisationstemperatur von 30°C und einem Umsatz von 71% erhalten.

*Vergleichsbeispiel 4*
Entsprechend Vergleichsbeispiel 2, aber bei 30°C polymerisiert.

*Vergleichsbeispiel 5*
Das Vergleichsbeispiel wurde nach DE-OS 3 002 711 Beispiel 13 durchgeführt; abweichend davon wurde nicht mit Formamidinsulfinsäure sondern nach EP-A-34 747, Beispiel 14a mit Natriumdithionit und Kaliumperoxodisulfat aktiviert. Es wurden 0,011 Gew.-Teile Natriumdithionit und 0,075 Gew.-Teile Kaliumperoxodisulfat benötigt. Die wäßrige Phase enthielt 7 mg $O_2$/l Emulgatorphase. Das Polymere wurde ohne Comonomer bei einer Polymerisationstemperatur von 45°C und einem Umsatz von 65% erhalten.

*Vergleichsbeispiele 6 und 7*
Die Vergleichsbeispiele wurden wie die erfindungsgemäßen Beispiele g) h) i) j) durchgeführt. Abweichend von diesen erfindungsgemäßen Beispielen wurde kein Additiv (Dithiocarbamat bzw. Xanthogenat) eingesetzt.

An den Rohkautschuken wurden folgende Bestimmungen durchgeführt.

Die Mooneyviskosität (ML 1+4) wurde nach DIN 53 523 Teil 1-3 bei 100°C bestimmt.

Die Mooneystabilität nach Heißluftalterung (δ ML) wurde als Differenz der Mooneywerte von Walzfellen nach und vor 72stündiger Lagerung bei 70°C bestimmt. Im Falle positiven Vorzeichens erfolgt eine Zunahme der Mooneyviskosität nach der Heißluftalterung und umgekehrt.

Die Vulkanisationen wurden auf der Basis folgender Mischung durchgeführt:

Iso-Mischung 2475:
100,0 Gew.-Teile Polymer
0,5 Gew.-Teile Stearinsäure
2,0 Gew.-Teile Phenyl-β-naphthylamin
30,0 Gew.-Teile Ruß (N 762)
4,0 Gew.-Teile Magnesiumoxid
5,0 Gew.-Teile Zinkoxid aktiv
0,5 Gew.-Teile Ethylenthioharnstoff

Die hergestellte Testmischung wurde im Scher-Vulkameter nach DIN 53 529 bei 150°C vulkanisiert und die Größen $t_{10}$, $t_{80}$ und $t_R$ bestimmt. $t_{10}$ und $t_{80}$ sind die Zeiten, bei denen 10% bzw. 80% des im Vulkameter bestimmbaren Umsatzes erreicht sind; $t_R$ erhält man als Differenz aus $t_{80} - t_{10}$.

Am Vulkanisat erfolgten die Bestimmungen von Zugfestigkeit, Bruchdehnung und Modul bei 300% Dehnung nach einer Vulkanisationszeit von 30 Min. nach DIN 53 504.

TABELLE 1

Herstellungsbedingungen der Beispiele a) bis f)

| Versuch | Monomer CP | Monomer DCB | n-DDM | Dibutyl-dithio-carbamat | $K_2S_2O_8$ | Silbersalz | Temperatur (°C) | Monomer-umsatz (%) | Polymerisationszeit (Min.) |
|---|---|---|---|---|---|---|---|---|---|
| a) | 100 | — | 0,31 | 0,5 | 0,11 | 0,02 | 45 | 65 | 122 |
| b) | 100 | — | 0,31 | 1,0 | 0,10 | 0,02 | 45 | 65 | 105 |
| c) | 100 | — | 0,285 | 2,0 | 0,07 | 0,01 | 45 | 64 | 150 |
| d) | 100 | — | 0,285 | 3,0 | 0,06 | 0,01 | 45 | 65 | 135 |
| e) | 100 | — | 0,30 | 3,0 | 0,06 | 0,01 | 45 | 63 | 138 |
| f) | 94,6 | 5,4 | 0,31 | 1,0 | 0,08 | 0,02 | 45 | 65 | 85 |

TABELLE 2

Anwendungstechnische Eigenschaften der Beispiele a) bis f)

| Versuch | ML 1+4 (ME) | ΔML (72 h) (ME) | $t_{10}$ | $t_{80}$ (Min.) | $t_R$ | Zugfestigkeit (MPa) | Bruchdehnung (%) | M bei 300% Dehnung (MPa) |
|---|---|---|---|---|---|---|---|---|
| a) | 43 | +6 | 3 | 17 | 14 | 20,5 | 490 | 11,2 |
| b) | 45 | +5 | 3 | 18 | 15 | 20,3 | 480 | 11,0 |
| c) | 46 | +3 | 3 | 18 | 15 | 20,4 | 500 | 10,3 |
| d) | 43 | +2 | 4 | 17 | 13 | 20,1 | 470 | 11,4 |
| e) | 36 | +2 | 3 | 17 | 14 | 20,0 | 500 | 10,4 |
| f) | 52 | +6 | 3 | 18 | 15 | 20,0 | 490 | 10,9 |

TABELLE 3

Herstellungsbedingungen der Vergleichsbeispiele 1) - 5)

| Vergleichs-beispiel | Monomer CP | Monomer DCB | n-DDM | Temperatur (°C) | Monomer-umsatz (%) | Polymerisations-zeit (Min.) | Aktivator |
|---|---|---|---|---|---|---|---|
| 1) | 100 | — | 0,20 | 45 | 65 | 225 | Formamidinsulfinsäure |
| 2) | 94,6 | 5,4 | 0,20 | 45 | 65 | 200 | Formamidinsulfinsäure |
| 3) | 100 | — | 0,24 | 30 | 71 | 266 | Formamidinsulfinsäure |
| 4) | 94,6 | 5,4 | 0,20 | 30 | 65 | 257 | Formamidinsulfinsäure |
| 5) | 100 | — | 0,25 | 45 | 65 | 150 | Na-dithionit/$K_2S_2O_8$ |
| 6) | 100 | — | 0,25 | 45 | 65 | 279 | $K_2S_2O_8$/Silbersalz |

TABELLE 4

Anwendungstechnische Eigenschaften der Vergleichsbeispiele 1) - 6)

| Vergleichs-beispiel | ML 1+4 (ME) | △ML (72 h) (ME) | $t_{10}$ | $t_{80}$ (Min.) | $t_R$ | Zugfestigkeit (MPa) | Bruchdehnung (%) | M bei 300% Dehnung (MPa) |
|---|---|---|---|---|---|---|---|---|
| 1 | 45 | ±0 | 3 | 16 | 13 | 17,8 | 410 | 12,5 |
| 2 | 45 | −1 | 3 | 17 | 14 | 18,0 | 430 | 11,6 |
| 3 | 41 | +4 | 3 | 18 | 15 | 19,8 | 500 | 10,0 |
| 4 | 76 | +2 | 4 | 19 | 15 | 20,0 | 440 | 13,1 |
| 5 | 66 | +1 | 3 | 18 | 15 | 18,0 | 450 | 10,7 |
| 6 | 45 | +4 | 3 | 16 | 13 | 17,8 | 440 | 10,8 |

TABELLE 5

Herstellungsbedingungen und Polymerisationsverlauf bei den Beispielen g) - k) und den Vergleichsbeispielen 6) und 7); Monomerumsatz jeweils 65%

| Beispiele | Chloro-pren | n-DDM | Dibutyldi-thiocarbamat (Na-Salz) | 2-Ethyl-hexylxan-thogenat (K-Salz) | $K_2S_2O_8$ | Silber-salz | Tempe-ratur (°C) | Inhibi-tionszeit (Min.) | Umsatz pro [1] Minute $(\%\cdot Min.^{-1})$ | Polymeri-sations-zeit (Min.) |
|---|---|---|---|---|---|---|---|---|---|---|
| g) | 100 | 0,25 | 2,5 | — | 0,26 | 0,03 | 45 | <1 | 2,3 | 30 |
| h) | 100 | 0,25 | 1,0 | — | 0,35 | 0,03 | 45 | <1 | 1,4 | 45 |
| i) | 100 | 0,25 | 0,1 | — | 0,51 | 0,03 | 45 | <1 | 1,4 | 60 |
| j) | 100 | 0,32 | — | 1,0 | 0,30 | 0,03 | 45 | <1 | 1,6 | 100 |
| k) | 100 | 0,23 | 1,0 | — | 0,05 | 0,02 | 25 | <1 | 0,80 | 140 |
| Vergleichs-beispiele | | | | | | | | | | |
| 6) | 100 | 0,25 | — | — | 0,47 | 0,03 | 45 | 175 | 1,4 | 279 |
| 7) | 100 | 0,25 | — | — | 0,47 | 0,03 | 45 | 148 | 1,6 | 266 |

[1] Aus dem linearen Teil der Zeit/Umsatz-Kurve berechnet

Im Vergleich zu den Beispielen des Standes der Technik wird mit den erfindungsgemäßen Beispielen gezeigt, daß

1. die Induktionsperioden bis zum Einsetzen der Polymerisation durch Zusätze von Dithiocarbamat und Xanthogenat reduziert werden,
2. die Polymerisationszeiten bis zu vergleichbaren Umsätzen erfindungsgemäß kürzer sind und
3. die Zugfestigkeiten der erfindungsgemäßen Produkte denen der bei gleicher Temperatur hergestellten Produkte des Standes der Technik überlegen sind.

**Patentansprüche**

1. Verfahren zur Herstellung von Polychloropren durch Emulsions-(Co)polymerisation von Chloropren und gegebenenfalls weiteren mit Chloropren copolymerisierbaren Monomeren in Abwesenheit von Schwefel mit Hilfe eines Peroxoaktivators und nachfolgende Aufarbeitung durch Abstoppen, Stabilisieren, Entgasen und Isolieren, dadurch gekennzeichnet, daß man dem Polymerisationsansatz Dithiocarbamate und/oder Xanthogenate und 0 bis 0,5 Gew.-% Natrium-β-anthrachinonsulfonat vor oder gleichzeitig mit dem Aktivator zudosiert.

2. Verfahren nach Anspruch 1, dadurch gekennzeichnet, daß Chloropren mit bis zu 30 Gew.-%, bezogen auf Gesamtmonomere, an 2,3-Dichlorbutadien, 1-Chlorbutadien, Butadien, Isopren, Acrylsäure, Methacrylsäure, Acrylnitril oder Methacrylnitril polymerisiert bzw. copolymerisiert wird.

3. Verfahren nach Anspruch 1, dadurch gekennzeichnet, daß als Aktivatoren Salze der Peroxodischwefelsäure verwendet werden.

4. Verfahren nach Anspruch 1, dadurch gekennzeichnet, daß die Dithiocarbamate und Xanthogenate in Form ihrer Alkalisalze eingesetzt werden.

5. Verfahren nach Anspruch 4, dadurch gekennzeichnet, daß die Dithiocarbamatanionen der Formel

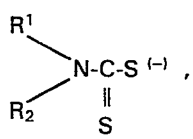

und die Xanthogenatanionen der Formel

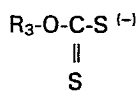

entsprechen, wobei $R_1$, $R_2$ und $R_3$ einen gegebenenfalls substituierten Alkyl-, Cycloalkyl- oder Arylrest bedeuten, $R_1$ und $R_2$ darüber hinaus zusammen mit dem Stickstoffatom einen Ring bilden können und $R_1$, $R_2$ und $R_3$ Heteroatome enthalten können.

6. Verfahren nach Anspruch 5, dadurch gekennzeichnet, daß $R_1$ und $R_2$ $C_1$-$C_4$-Alkyl und $R_3$ $C_1$-$C_8$-Alkyl oder 2,2-(2,3-Dioxapentamenthylen)-butyl bedeuten.

7. Verfahren nach Anspruch 1, dadurch gekennzeichnet, daß 0,05 bis 5,0, insbesondere 0,1 bis 3,0 Gew.-%, Natriumdibutyldithiocarbamat, bezogen auf Monomere, oder eine entsprechende molare Menge eines anderen Dithiocarbamates oder 0,1 bis 5,0, insbesondere 0,5 bis 3,0 Gew.-%, Kaliumethylxanthogenat, bezogen auf Monomere, oder eine entsprechende molare Menge eines anderen Xanthogenates, eingesetzt werden.

8. Verfahren nach Anspruch 1, dadurch gekennzeichnet, daß Natrium-anthrachinon-2-sulfonat in einer Menge von 0,005 bis 0,1 Gew.-%, bezogen auf Monomere, eingesetzt wird.

**Claims**

1. Process for the preparation of polychloroprene by emulsion (co)polymerisation, in the absence of sulphur, of chloroprene and optionally other monomers which are copolymerisable which chloroprene, with the aid of a peroxoactivator, followed by working up by reaction stopping, stabilisation, degasification and isolation, characterised in that dithiocarbamates and/or xanthanes and from 0 to 0.5% by weight of sodium-β-anthraquinone sulphonate are added to the polymerisation reaction mixture before or at the same time as the activator.

2. Process according to claim 1, characterised in that chloroprene is polymerised or copolymerised with up to 30% by weight, based on the total quantity of monomers, of 2,3-dichlorobutadiene, 1-chlorobutadiene, butadiene, isoprene, acrylic acid, methacrylic acid, acrylonitrile or methacrylonitrile.

3. Process according to claim 1, characterised in that salts or peroxidisulphuric acid are used as activators.

4. Process according to claim 1, characterised in that the dithiocarbamates and xanthates are used in the form of their alkali metal salts.

5. Process according to claim 4, characterised in that the dithiocarbamate anions correspond to the following formula:

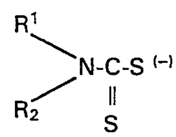

and the xanthane anions correspond to the following formula:

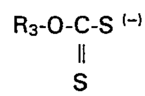

wherein $R_1$, $R_2$ and $R_3$ denote an optionally substituted alkyl, cycloalkyl or aryl group and $R_1$ and $R_2$ together with the nitrogen atom may also form a ring and $R_1$, $R_2$ and $R_3$ may contain heteroatoms.

6. Process according to claim 5, characterised in that $R_1$ and $R_2$ denote $C_1$-$C_4$ alkyl and $R_3$ denotes $C_1$-$C_8$ alkyl or 2,2-(2,3-dioxapentamethylene)-butyl.

7. Process according to claim 1, characterised in that from 0.05 to 5.0, in particular from 0.1 to 3.0% by weight of sodium dibutyldithiocarbamate, based on the quantity of monomers, or a corresponding molar quantity of another dithiocarbamate or from 0.1 to 5.0, in particular from 0.5 to 3.0% by weight of potassium ethyl xanthate, based on the quantity of monomers, or a corresponding molar quantity of another xanthate are used.

8. Process according to claim 1, characterised in that sodium anthraquinone-2-sulphonate is used in a

quantity of from 0.005 to 0.1% by weight, based on the quantity of monomers.

## Revendications

1. Procédé de production de polychloroprène par (co)polymérisation en émulsion de chloroprène et, le cas échéant, d'autres monomères copolymérisables avec le chloroprène en l'absence de soufre à l'aide d'un activateur peroxo, puis traitement par arrêt de la réaction, stabilisation, dégazage et isolement, caractérisé en ce qu'on ajoute à la charge à polymériser, avant ou en même temps que l'activateur, des dithiocarbamates et/ou des xanthogénates et 0 à 0,5% en poids de β-anthraquinonesulfonate de sodium.

2. Procédé suivant la revendication 1, caractérisé en ce qu'on polymérise ou on copolymérise du chloroprène avec jusqu'à 30% en poids, par rapport aux monomères totaux, de 2,3-dichlorobutadiène, de 1-chlorobutadiène, de butadiène, d'isoprène, d'acide acrylique, d'acide méthacrylique, d'acrylonitrile ou de méthacrylonitrile.

3. Procédé suivant la revendication 1, caractérisé en ce qu'on utilise comme activateurs des sels d'acide peroxodisulfurique.

4. Procédé suivant la revendication 1, caractérisé en ce qu'on utilise les dithiocarbamates et les xanthogénates sous forme de leurs sels alcalins.

5. Procédé suivant la revendication 4, caractérisé en ce que les anions dithiocarbamate correspondent à la formule

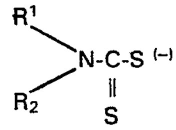

et les anions xanthogénates correspondant à la formule

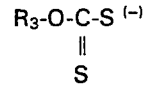

formules dans lesquelles $R_1$, $R_2$ et $R_3$ désignent un reste alkyle, cycloalkyle ou aryle éventuellement substitué, $R_1$ et $R_2$ peuvent former en outre un noyau conjointement avec l'atome d'azote, et $R_1$, $R_2$ et $R_3$ peuvent contenir des hétéro-atomes.

6. Procédé suivant la revendication 5, caractérisé en ce que $R_1$ et $R_2$ sont des restes alkyle en $C_1$ à $C_4$ et $R_3$ est un reste alkyle en $C_1$ à $C_8$ ou le reste 2,2-(2,3-dioxapentaméthylène)-butyle.

7. Procédé suivant la revendication 1, caractérisé en ce qu'on utilise 0,05 à 5,0, notamment 0,1 à 3,0% en poids de dibutyldithiocarbamate de sodium par rapport aus monomères, ou une quantité molaire correspondante d'un autre dithiocarbamate ou 0,1 à 5,0, notamment 0,5 à 3,0% en poids, de méthylxanthogénate de potassium, par rapport aux monomères, ou une quantité molaire correspondante d'un autre xanthogénate.

8. Procédé suivant la revendication 1, caractérisé en ce qu'on utilise de l'anthraquinone-2-sulfonate de sodium en une quantité de 0,005 à 0,1% en poids par rapport aux monomères.